# EUROPÄISCHE PATENTSCHRIFT

(11) **EP 3 775 616 B1**
(45) Veröffentlichungstag und Bekanntmachung des Hinweises auf die Patenterteilung: **26.04.2023**
(21) Anmeldenummer: 19701464.0
(22) Anmeldetag: 14.01.2019
(51) Int. Cl.: F16H 7/10, F16H 37/02, F16H 37/08, F16H 7/08

(54) **MEHRSTUFIGE GETRIEBEANORDNUNG**
MULTISTAGE GEAR ASSEMBLY
ENSEMBLE D'ENGRENAGES À PLUSIEURS ÉTAGES

(30) Priorität: 29.03.2018 DE 102018204830
(43) Veröffentlichungstag der Anmeldung: 17.02.2021
(73) Patentinhaber: ContiTech Antriebssysteme GmbH, 30165 Hannover (DE)
(72) Erfinder: FREIHEIT, Philipp, 30419 Hannover (DE); FISS, Tim, 30419 Hannover (DE); FRAMENT, Olivier, 30419 Hannover (DE)
(74) Vertreter: Continental Corporation
(86) Internationale Anmeldenummer: PCT/EP2019/050752
(87) Internationale Veröffentlichungsnummer: WO 2019/185209

(56) Entgegenhaltungen:
- WO-A1-2012/007031
- DE-A1-102010 060 705
- US-A1- 2009 264 246
- US-A1- 2013 065 721

## Beschreibung

Die Erfindung betrifft eine mehrstufige Getriebeanordnung zur Leistungsübertragung zwischen Wellen.

Mehrstufige Getriebeanordnungen zur Leistungsübertragung sind in einer Vielzahl von Ausführungsformen im Stand der Technik bekannt. Sehr oft handelt es sich dabei um Zahnradgetriebe aus Stahl, beispielsweise um Stirnradgetriebe oder Kegelgetriebe zur Übersetzung von Drehzahlen und Drehmomenten. Mehrstufige Getriebe können dabei schaltbar ausgeführt oder mit einer festen Übersetzung versehen sein.

Insbesondere bei Fahrzeugen kommt es darauf an, dass dort verwendete Getriebe möglichst wenig Gewicht aufweisen und trotzdem alle anderen Leistungsdaten sowie hohe Übersetzungen erfüllen können. Gerade bei der Realisierung von hohen Übersetzungen sind oft mehrere Stufen erforderlich, wodurch das Gewicht solcher Getriebe steigt. Auch vergrößern sich hierdurch die Achsabstände der Zahnräder, so dass der notwendige Bauraum relativ groß wird. Auch das ist in Fahrzeugen eher ungewünscht.

Weiterhin müssen in einem Zahnradgetriebe die miteinander kämmenden Zahnräder eine ausreichende Schmierung aufweisen, die in aller Regel durch eine Ölschmierung bereitgestellt wird. In einigen Fällen ist eine solche Ölschmierung nur durch separate Pumpen und Umlaufkanäle möglich. Bei hohen Übersetzungen und einer damit hohen Anzahl miteinander kämmenden Zahnräder ist zudem die Geräuschemission solcher Getriebe erheblich.

Elektrofahrzeuge und auch kleinere Servicefahrzeuge mit relativ schnelllaufenden Elektromotoren als Antrieb benötigen zur Wandlung der Drehzahlen und Drehmomente Getriebe mit sehr hohen Übersetzungen. Die im Stand der Technik dazu bekannten Lösungen führen dazu, dass, wie oben dargestellt, das Gewicht solcher Getriebe steigt. Auf der anderen Seite müssen solche Getriebe aber nicht unbedingt schaltbar sein, da die Elektromotoren in einem relativ breiten Bereich von Drehzahlen und Drehmomenten betrieben werden können.

In den Fällen aber, in denen bei Elektrofahrzeugen die einzelnen Räder oder Achsen direkt über separate Elektromotoren angetrieben werden, insbesondere bei Radnabenantrieben, tritt das Problem der hohen erforderlichen Übersetzungen und des damit steigenden Getriebegewichts besonders nachteilig auf, da sich in diesen Fällen die so genannte "ungefederte Masse" der Räder stark erhöhen kann, was natürlich unerwünscht ist.

Die DE 10 2011 011 012 A1 offenbart beispielsweise einen Radnabenantrieb für ein Kraftfahrzeug mit vorzugsweise einem Elektromotor und einem integrierten Planetengetriebe, welches als Stufenplanetengetriebe ausgebildet ist und ein relativ großes Übersetzungsverhältnis aufweist. Damit erhält man nachteiliger Weise eine relativ hohe ungefederte Masse.

Die DE 39 24 817 A1 offenbart einen Antrieb, insbesondere für Rollstühle oder dergleichen, bei dem der Antriebsmotor ebenfalls als Radnabenantrieb ausgebildet ist und ein mehrstufiges Planetengetriebe aufweist, welches eine Leistungsverzweigung beinhaltet.

Auch sind Riementriebe als leichtere und wartungsarme Getriebe im Stand der Technik bei den Fahrzeugantrieben bekannt. So offenbart die die DE 8513152 U1 ein als Riemengetriebe ausgebildetes Umlaufrädergetriebe, bei dem der Riemen um das Sonnenrad herum und so zwischen Planetenrädern und einem Hohlrad hindurchgeführt wird, dass alle Räder miteinander drehend verbunden sind. Vorzugsweise wird hier ein beidseitig gezahnter Riemen verwendet, der das außenverzahnte Sonnenrad und die außenverzahnten Planetenräder umschlingt und mit der rückseitigen Verzahnung in das mit einer Innenverzahnung ausgebildete Hohlrad eingreift. Die Planetenräder sind dabei auf einem Steg drehbar so gelagert, dass der im Zwischenraum zwischen Planetenrädern Hohlrad durchlaufende beidseitig verzahnte Riemen sowohl in die Außenverzahnung des Planetenrades als auch in die Innenverzahnung des Hohlrades eingreift. Die Verzahnungen des Sonnenrades und der Planetenräder greifen also mit ihrer Verzahnung nicht direkt ineinander, sondern sind über den Antriebsriemen miteinander verbunden. Gleiches gilt für die Paarung von Planetenrädern und Hohlrad. Bei einem solchen Planeten-Riemengetriebe kann der gleichzeitige Eingriff des Riemens in die außenverzahnte Planetenräder und in das innenverzahnte Hohlrad dazu führen, dass Unterschiede in der Umfangsgeschwindigkeit der Räder zu nachteiligen Kraft- und Spannungsverhältnissen innerhalb des Zahnriemens führen, die die Lebensdauer herabsetzen können.

Die US 2009264246 A1 offenbart ein Getriebe für einen Vorderradantrieb eines Fahrzeugs, bei dem ein Zugmittelgetriebe und eine Leistungsteilungsgetriebe in Reihe hintereinander geschaltet und in einem Getriebegehäuse angeordnet sind, was einen relativ großen Einbauraum erfordert und relativ große Massenträgheiten aufweist.

Die US 2013/0190124 A1 offenbart einen elektrischen Antrieb für ein Fahrzeug mit einem Elektromotor und einer Antriebseinheit/einem Getriebe. Das Getriebe weist mehrere Getriebestufen auf und ist in einem an den Motor angeflanschten Gehäuse angeordnet. Eine der Getriebestufen kann als Kettentrieb oder auch als Zugriementrieb ausgebildete sein.

Die DE 10 2012 103 355 A1 offenbart eine Antriebseinrichtung für ein Elektrofahrrad mit einem Kettentrieb oder Zugmitteltrieb, der nicht in dem eigentlichen Getriebegehäuse angeordnet ist. Das diesbezügliche Drehmoment wird vielmehr über eine an einer Getriebewelle außerhalb des Getriebegehäuses drehfest angeschlossene Riemenscheibe oder ein Kettenrad in das Getriebe eingebracht.

Die US 2014/030068 A1 offenbart eine Nabe für ein Zweirad offenbart, in der ein Umlaufgetriebe, ein Freilauf sowie entsprechende und mit dem Tretlager zusammenwirkende Sperrvorrichtungen so angeordnet sind, dass eine Vorwärts- und eine Rückwärtsbewegung der Pedale jeweils in Vortrieb umgewandelt werden. Auch hier ist kein Zugmitteltrieb innerhalb eines geschlossenen Gehäuses untergebracht.

Für die Erfindung bestand daher die Aufgabe, eine mehrstufige Getriebeanordnung zur Leistungsübertragung zwischen Wellen bereitzustellen, welche bei einer möglichst hohen Übersetzung ein im Vergleich den üblichen Getrieben geringes Gewicht aufweist, einen möglichst geringen Bauraum benötigt, geringe Massenträgheiten aufweist, welche die Vorteile einer einfachen Wartung und vernachlässigbaren Schmierung mit einer hohen Leistungsübertragung kombiniert, und welche sich durch eine stark reduzierte Geräuschemission auszeichnet und schwingungsarm läuft.

Gelöst wird diese Aufgabe durch die Merkmale des Hauptanspruchs. Weitere vorteilhafte Ausbildungen sind in den Unteransprüchen offenbart.

Dabei sind mindestens eine als Umlaufgetriebe ausgebildete Getriebestufe und eine als Zugriementrieb ausgebildete Getriebestufe im Kraft- bzw. Leistungsfluss innerhalb eines gemeinsamen Getriebegehäuses angeordnet.

Kombiniert man in der erfindungsgemäßen Art die beiden Getriebearten Umlaufgetriebe und Zugriementriebe im Kraft-bzw. Leistungsfluss in einem einzigen Gehäuse, so erreicht man eine sehr hohe Gesamtübersetzung. Zugriementriebe sind wesentlich leichter als beispielsweise Getriebe mit Zahnrädern aus Metall und reduzieren in der Gesamtsicht das Gewicht erheblich. Gleichermaßen sind sie relativ wartungsfrei und schwingungsarm. Es ergibt sich ein Getriebebauteil, welches insbesondere für schnelllaufende Elektromotoren für den Antrieb von Fahrzeugen / Elektrofahrzeugen ein hohes Übersetzungsverhältnis bereitstellt, ohne das Gewicht des Bauteils über die Maßen zu erhöhen. Das Übersetzungsverhältnis ist das Verhältnis der Zähnezahlen, Durchmesser, oder der Drehmomente der getriebenen zu den treibenden Rädern, d.h. von Abtriebsrad oder - scheibe zu Antriebsrad (i = Z₂ / Z₁ = d₂ / d₁). Genau umgekehrt ist es bei den Drehzahlen (i = n₁ / n₂). Das Gesamtübersetzungs-verhältnis entsteht dann durch Multiplizieren der Einzelübersetzungsverhältnisse.

Zugriementrieb und Umlaufgetriebe weisen dabei jeweils eine feste, nicht schaltbare Übersetzung auf. Damit ist die Getriebeanordnung gut geeignet, als leichtes Getriebebauteil bei Antrieben eingesetzt zu werden, bei denen jedes Rad einen eigenen Antrieb bzw. Antriebsmotor besitzt, als bei den so genannten "radindividuellen" Antrieben.

Diese mehrstufige Getriebeanordnung zur Leistungsübertragung ist zwischen mindestens drei Wellen, ausgebildet, wobei mindestens zwei als Umlaufgetriebe ausgebildete Getriebestufen und eine als Zugriementrieb ausgebildete Getriebestufe im Kraft- bzw. Leistungsfluss angeordnet sind. Dabei sind erfindungsgemäß der Zugriementrieb und eines der Umlaufgetriebe als reine Übersetzungsgetriebe mit i_{gesamt} < 1oder i_{gesamt} > 1 ausgebildet, also ggf. auch als Untersetzungsgetriebe und eines der Umlaufgetriebe als Leistungsteilungs- oder Summengetriebe ausgebildet, wobei die Getriebestufen innerhalb eines gemeinsamen Getriebegehäuses angeordnet sind.

Die als Umlaufgetriebe ausgebildete Getriebestufen und die als Zugriementrieb ausgebildete Getriebestufe sind dabei im Kraft- bzw. Leistungsfluss in Reihe angeordnet. So erhält man ein kompaktes Getriebe zur Übertragung großer Leistungen, etwa ein Getriebe mit integriertem Differential in einer Antriebsachse eines Elektrofahrzeugs, wie unten noch näher beschrieben.

Die Umlaufgetriebe sind als Zahnradgetriebe und die Zugriementriebe als Zahnriementriebe ausgebildet. So ausgebildete Zugriementriebe, im Übrigen auch Zugriementriebe mit Keilrippenriemen, übertragen relativ hohe Drehmomente. Bei entsprechender Auslegung führt die Kombination aus Riementrieb und Umlaufgetriebe zu einer Übertragung großer Drehmomente mit hohen Übersetzungen und zu kleiner Baugröße. Der gewünschte Effekt wird also besonders gut erreicht.

Der Zugriementrieb ist als einfaches einstufiges Übersetzungsgetriebe aus je einer über Zugriemen verbundenen Antriebs- und Abtriebsscheibe ausgebildet. Hierdurch ergibt sich eine besonders einfache Bauweise mit sehr wenigen Bauteilen.

Die mehrstufige Getriebeanordnung zwischen einem Antrieb bzw. einer Antriebswelle und zwei Ausgangswellen ist so ausgebildet, dass zwei Umlaufgetriebe und ein Zugriementrieb im Kraftfluss in Reihe angeordnet sind, wobei der Zugriementrieb und eines der Umlaufgetriebe als Übersetzungsgetriebe mit einer Übersetzung von i ≥ 1 und ein Umlaufgetriebe als Differential oder Leistungsteilungsgetriebe für die Ausgangswellen vorgesehen ist.

In einer solchen Ausbildung erhält man ein Getriebe, was einerseits eine hohe Übersetzung bereitstellt und andererseits ein integriertes Differential aufweist. Durch die kompakte Bauweise innerhalb eines einzigen Gehäuses lässt sich ein solches Getriebe bzw. eine solche Getriebeanordnung als Modul montagefertig herstellen und leicht an verschiedene Fahrzeuge anbauen.

Eine insbesondere aufgrund ihrer kompakten Bauweise besonders vorteilhafte erfindungsgemäße Ausführung einer Konstruktion für eine mehrstufige Getriebeanordnung besteht darin, dass antriebsseitig, d.h. ausgehend vom Hauptantrieb bzw. der Eingangswelle etwa eines Elektromotors zunächst ein erstes Umlaufrädergetriebe mit einem ersten Planetenträger oder Steg zur Aufnahme und Lagerung von ersten Planetenrädern, vorzugsweise stirnverzahnt, vorgesehen ist. Diese ersten Planetenräder kämmen mit dem konzentrisch zum ersten Planetenträger angeordneten und mit der Eingangswelle drehfest verbundenen ersten Sonnenrad einerseits und mit einem konzentrisch zum ersten Planetenträger angeordneten innenverzahnten Hohlrad andererseits. Der Antrieb erfolgt hier also über das Sonnenrad des ersten Umlaufgetriebes.

Das im Gehäuse drehbar gelagerte Hohlrad ist gleichzeitig als Antriebsscheibe eines Zugriementriebs ausgebildet, bei dem der Zugriemen einerseits das Hohlrad und andererseits eine Abtriebsscheibe außenseitig reib- und/oder formschlüssig zur Übertragung eines Drehmoments und einer Drehzahl teilumlaufend umschlingt.

Die Abtriebsscheibe und der Planetenträger eines als Differential ausgebildeten zweiten Umlaufgetriebes sind dabei so ausgebildet, dass die Drehung der Abtriebsscheibe des Zugriementriebs auf den Planetenträger des zweiten Umlaufgetriebes übertragbar ist. Vorteilhafterweise ist die Abtriebsscheibe selbst als Planetenträger des zweiten Umlaufgetriebes ausgebildet oder jedenfalls drehfest mit dem Planetenträger verbunden.

Das zweite Umlaufgetriebe weist zwei mit jeweils einer Ausgangswelle drehfest verbundene Differential-Sonnenräder auf, die mit im zweiten Planetenträger gelagerten zweiten Planetenrädern so kämmen, dass die Ausgangswellen mit gleicher oder unterschiedlicher Drehzahl oder Drehrichtung drehbar sind. Auch hier sind die Differential-Sonnenräder und zweite Planetenräder in der Regel als Kegelzahnräder ausgebildet.

Besonders wenig Bauraum wird bei Konstruktionen benötigt, bei denen der oder die Sonnenräder mindestens eines der Umlaufgetriebe konzentrisch zur Achse einer der Riemenscheiben angeordnet sind. Diese Ausbildung wird noch dadurch unterstützt, dass mindestens eines der Umlaufgetriebe im Wesentlichen innerhalb des Hohlrads und bzw. oder der Abtriebsscheibe oder innerhalb einer durch den Außenumfang des Hohlrads (31) und bzw. oder der Abtriebsscheibe (33) aufgespannten zylinderförmigen Hüllkurve angeordnet ist.

Eine weitere vorteilhafte Ausbildung besteht darin, dass innerhalb des Getriebegehäuses eine lastabhängige Spanneinrichtung für den Zugriementrieb vorgesehen ist, bei der eine schwenkbar gelagerte erste Spannrolle als Rückenrolle dem Lasttrum und eine schwenkbar gelagerte zweite Spannrolle als Rückenrolle dem Leertrum zugeordnet sind, wobei die Spannrollen jeweils über eine an die Spannrollen angelenkte und vorzugsweise im Gehäuse gelagerte Pendelstütze schwenkbar und miteinander so verbunden sind, dass durch ein unter Antriebslast erfolgendes Verschwenken der auf dem Lasttrum abrollenden ersten Spannrolle die auf dem Leertrum abrollende zweite Spanrolle verschwenkbar und im Sinne einer Erhöhung der Riemenspannung dem Leertrum zustellbar ist. Solche Spanneinrichtungen sind zwar grundsätzlich bekannt, haben aber gerade in Verbindung mit der hier offenbarten Getriebeanordnung einerseits den Effekt, dass auch bei einer möglichen Drehrichtungs- bzw. Momentenumkehr, d.h. bei Momentenschwankungen im Getriebe, die Spannung aufrecht erhalten bleibt und dass das Getriebe über seine Lebensdauer wartungsfrei bleibt. Das erlaubt es, das Getriebe auch an weniger zugänglichen Stellen an einer Antriebsachse einzubauen. Ein weiterer großer Vorteil der Spanneinrichtung besteht darin, dass mit einer solchen Momentenumkehr bzw. Drehrichtungsumkehr das Getriebe bzw. Getriebeanordnung im Rekuperationsbetrieb verwendet werden kann. So ist bei Schubbetrieb eine Möglichkeit zur Ladung einer Batterie für einen Elektromotor gegeben.

Eine weitere vorteilhafte Ausbildung besteht darin, dass Getriebestufen und Getriebegehäuse modulartig und vorzugsweise ähnlich oder identisch so ausgebildet sind, dass mehrere Getriebegehäuse mit ihren Getriebestufen zu einem Getriebeblock im Antriebsstrang verbindbar sind, vorzugsweise über kongruent im oder am Getriebegehäuse angeordnete Bohrungen, Verbindungselemente oder Gehäuseöffnungen zusammenstellbar sind. Mit einem solchen Aufbau kann das Getriebe für unterschiedlichste Anwendungen gebraucht und in unterschiedlichen Fahrzeugvarianten eingebaut werden. So können zum Beispiel bei einem Elektroantrieb für die Hinterachse eines Kleinfahrzeugs ein oder zwei solcher Getriebemodule an der Hinterachse angeordnet sein.

Vorteilhaft ist die erfindungsgemäße Getriebeanordnung für eine Antriebsachse eines Elektrofahrzeugs zu verwenden, da üblicherweise hoch drehende Elektromotoren für Elektrofahrzeuge zur Wandlung der Drehzahlen und Drehmomente ein Getriebe mit einer hohen Untersetzung benötigen. Die Elektromotoren werden mit der erfindungsgemäßen Getriebeanordnung so untersetzt, dass durch ein Herabsetzen der Drehzahlen eine gewünschte Steigerung der Drehmomente am Abtrieb erfolgt, d.h. dann und in Bezug auf das Fahrzeug insgesamt, am angetriebenen Rad bzw. der angetriebenen Achse.

Durch die erfindungsgemäße Ausführung erhält man ein kompakt bauendes, hoch übersetzendes Getriebe. Durch die Hintereinanderschaltung von Planetengetrieben / Umlaufgetrieben und Riemengetrieben ergibt sich eine Reduktion der Eingangsdrehzahlen im Planetengetriebe bzw. im Differenzial und dadurch eine merkbare akustische Optimierung.

Es besteht kein Schmiermittelbedarf im Bereich der Riemenuntersetzung und es erfolgt eine Schwingungsdämpfung / -entkoppelung durch die elastischen Eigenschaften des Riemens. Auch kann das Planetengetriebe als z.B. 2. Untersetzungsstufe in die Abtriebsscheibe integriert werden, so dass kein weiterer axialer Bauraumbedarf für die zweite Untersetzungsstufe erforderlich ist.

Eine Gewichtseinsparung und eine Reduzierung von Kosten ergeben sich auch durch eine Verringerung von Öl zur Schmierung und die dafür benötigten Komponenten, wie Dichtungen, Ölpumpe, Filter etc. In der konstruktiven Ausführung erreicht man eine flexible Anpassung im Achsabstand durch Variierung der Riemenlänge sowie eine flexible Anpassung der Übersetzung durch verschiedene Scheibendurchmesser im Riementrieb bzw. die Untersetzung im Differenzial.

Anhand eines Ausführungsbeispiels soll die Erfindung näher erläutert werden. Es zeigen
- Fig. 1: eine erste Ausführung einer erfindungsgemäßen Getriebeanordnung,
- Fig. 2: eine weitere Möglichkeit der Anwendung einer erfindungsgemäßen Getriebeanordnung,
- Fig. 3: eine perspektivische Skizze einer weiteren Ausführung einer einfach aufgebauten erfindungsgemäßen Getriebeanordnung.

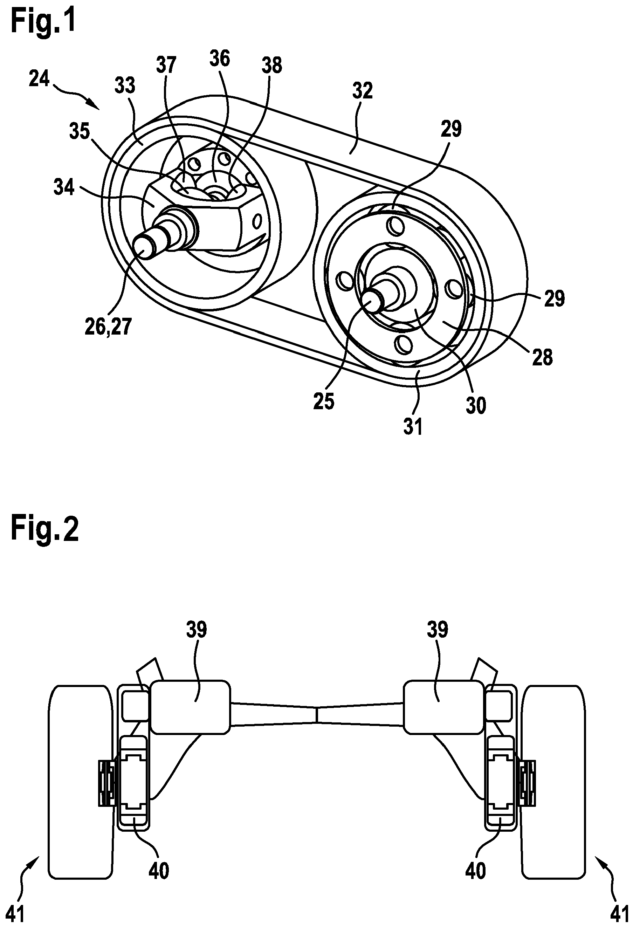

Fig. 1 zeigt eine erste Ausführung einer erfindungsgemäßen Getriebeanordnung 24, die sich durch eine besonders einfache und kompakte Bauweise auszeichnet. Der Antrieb erfolgt bei dieser Getriebeanordnung über die auf der rechten Seite gezeigte Eingangswelle 25, der Abtrieb über die beiden Ausgangswellen 26, 27. In dieser perspektivischen Darstellung ist nur die vordere Ausgangswelle 26 sichtbar, die hintere Ausgangswelle 27 tritt auf der anderen Getriebeseite aus.

Antriebsseitig, d.h. ausgehend einer durch einen Elektromotor angetriebenen Eingangswelle 25 ist zunächst ein erstes Umlaufrädergetriebe mit einem ersten Planetenträger 28 vorgesehen, nämlich zur Aufnahme und Lagerung von ersten Planetenrädern 29. Diese ersten Planetenräder 29 kämmen mit dem konzentrisch zum ersten Planetenträger 28 angeordneten und mit der Eingangswelle 25 drehfest verbundenen ersten Sonnenrad 30 einerseits und mit einem konzentrisch zum ersten Planetenträger angeordneten Hohlrad 31 andererseits. Planetenräder 29 und Sonnenrad 30 weisen hier eine Stirnverzahnung auf, das Hohlrad 31 eine Innenverzahnung.

Das im Gehäuse drehbar gelagerte Hohlrad 31 ist gleichzeitig als Antriebsscheibe eines Zugriementriebs ausgebildet, bei dem ein Zugriemen 32 einerseits das Hohlrad 31 und andererseits, bezogen auf den Zugriementrieb, eine Abtriebsscheibe 33 außenseitig reib- und/oder formschlüssig zur Übertragung eines Drehmoments und einer Drehzahl teilumlaufend umschlingt.

Die Abtriebsscheibe 33 selbst ist mit einem Planetenträger 34 eines als Differential ausgebildeten zweiten Umlaufgetriebes verbunden, hier verschraubt. Die Drehung bzw. das Drehmoment der Abtriebsscheibe 33 des Zugriementriebs ist so auf den Planetenträger 34 des zweiten Umlaufgetriebes übertragbar.

Das zweite Umlaufgetriebe weist zwei mit jeweils einer der Ausgangswellen 26, 27 drehfest verbundene Differential-Sonnenräder 35, 36 auf, die mit im zweiten Planetenträger gelagerten zweiten Planetenrädern 37, 38 so kämmen, dass die Ausgangswellen 26, 27 mit gleicher oder unterschiedlicher Drehzahl oder Drehrichtung drehbar sind. Die Differential-Sonnenräder 35, 36 und die Planetenrädern 37, 38 sind auch hier wieder als Kegelzahnräder ausgebildet.

Beide Umlaufgetriebe sind hier konzentrisch zur Achse der jeweiligen Riemenscheiben angeordnet. Das erste Umlaufgetriebe ist darüber hinaus im Wesentlichen innerhalb des als Antriebsscheibe ausgebildeten Hohlrads 31 angeordnet, während das zweite Umlaufgetriebe innerhalb einer durch den Außenumfang der Abtriebsscheibe 33 aufgespannten zylinderförmigen Hüllkurve, teilweise auch innerhalb der Abtriebsscheibe 33 angeordnet ist.

In der Fig. 2 ist eine Anwendung skizziert, bei der an einer Antriebsachse eines nicht näher dargestellten Fahrzeugs jedes Rad 41 mit einem separaten Elektromotor 39 und einem Getriebe 40 versehen ist, welches die erfindungsgemäße Getriebeanordnung aufweist. Aufgrund der separaten Antriebe ist hier allerdings kein als Differenzial ausgebildetes Umlaufrädergetriebe erforderlich, sondern lediglich eine als Umlaufgetriebe ausgebildete Getriebestufe und eine als Zugriementrieb ausgebildete Getriebestufe im Kraft- bzw. Leistungsfluss in Reihe innerhalb eines gemeinsamen Getriebegehäuses. Umlaufgetriebe und Zugriementrieb weisen jeweils eine feste, nicht schaltbare Übersetzung auf. Der Zugriementrieb ist als einfaches einstufiges Übersetzungsgetriebe aus je einer über Zugriemen verbundenen Antriebs- und Abtriebsscheibe ausgebildet, wobei die als Umlaufgetriebe ausgebildete Getriebestufe innerhalb der Abtriebsscheibe ausgebildet ist.

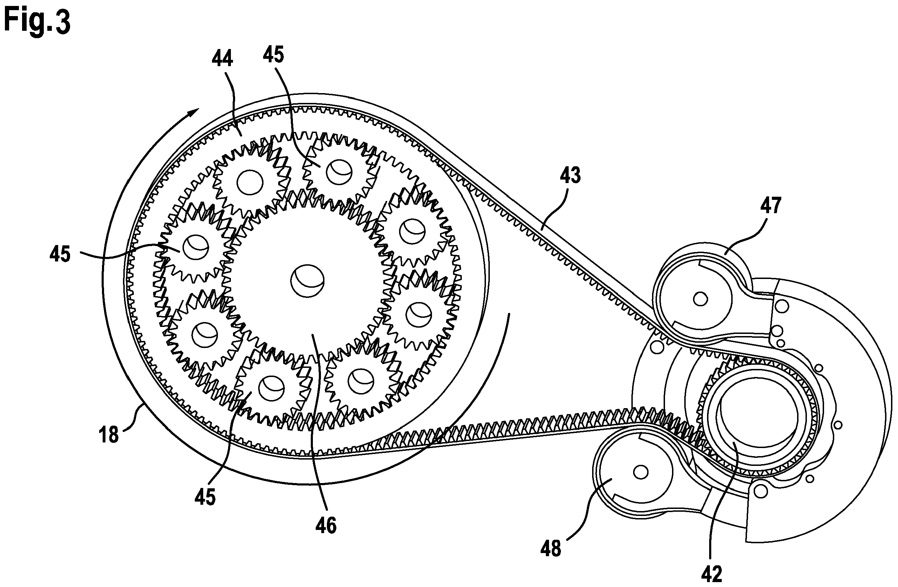

Fig. 3 zeigt in einer perspektivischen Skizze eine solche einfach gebaute erfindungsgemäße Getriebeanordnung, die z.B. für die Anwendung nach Fig. 4 geeignet ist. Antriebsseitig, d.h. auf einer durch einen Elektromotor angetriebenen und in der Fig. 3 nicht näher dargestellten Eingangswelle ist hier zunächst die Antriebsscheibe 42 eines Zahnriementriebs vorgesehen, bei dem ein Zahnriemen 43 die Antriebsscheibe 42 und die Abtriebsscheibe 44 teilweise um greifend umschlingt. Die Abtriebsscheibe 44 ist dabei als Außenrad oder Hohlrad eines Umlaufgetriebes ausgebildet, bei dem Planetenräder 45, die in einem hier nicht näher dargestellten Planetenträger gelagert sind, mit einem Sonnenrad 46 und mit der Innenverzahnung der als Hohlrad ausgebildeten Abtriebsscheibe 44 kämmend im Eingriff sind. Die Planetenräder 45 und das Sonnenrad 46 sind dabei mit einer Stirnverzahnung ausgebildet.

Die hier in der Figur 3 gezeigte Getriebeanordnung ist dabei ebenfalls mit einer Spanneinrichtung versehen, bei der, wie oben bereits beschrieben, eine schwenkbar gelagerte erste Spannrolle 47 als Rückenrolle dem Lasttrum und eine schwenkbar gelagerte zweite Spannrolle 48 als Rückenrolle dem Leertrum zugeordnet sind. Die Drehrichtung zeigt auch hier der Pfeil 18.

Damit erhält man ein leichtes, kompaktes Getriebe mit geringer Baugröße, welches flexibel für verschiedenste Rad- bzw. Achsabstände leicht anpassbar ist.

### Bezugszeichenliste

### (Teil der Beschreibung)

- 24: Getriebeanordnung
- 25: Eingangswelle
- 26: Ausgangswelle
- 27: Ausgangswelle
- 28: Erster Planetenträger
- 29: Erste Planetenräder
- 30: Erstes Sonnenrad
- 31: Hohlrad
- 32: Zugriemen
- 33: Abtriebsscheibe
- 34: Zweiter Planetenträger
- 35: Differential-Sonnenrad
- 36: Differential-Sonnenrad
- 37: Zweites Planetenrad
- 38: Zweites Planetenrad
- 39: Elektromotor
- 40: Getriebe
- 41: Rad
- 42: Antriebsscheibe
- 43: Zahnriemen
- 44: Abtriebsscheibe
- 45: Planetenrad
- 46: Sonnenrad
- 47: Spannrolle
- 48: Spannrolle

## Patentansprüche

1. Mehrstufige Getriebeanordnung zur Leistungsübertragung zwischen einer Eingangswelle (25) und zwei Ausgangswellen (26, 27), bei der mindestens zwei als Umlaufgetriebe ausgebildete Getriebestufen und eine als Zugriementrieb ausgebildete Getriebestufe im Kraft- bzw. Leistungsfluss in Reihe angeordnet sind und Umlaufgetriebe und/oder Zugriementrieb jeweils eine feste, nicht schaltbare Übersetzung aufweisen, wobei eines der Umlaufgetriebe als Differential oder Leistungsteilungsgetriebe für die Ausgangswellen (26, 27) ausgebildet und die Getriebestufen innerhalb eines gemeinsamen Getriebegehäuses angeordnet sind, wobei die Umlaufgetriebe als Zahnradgetriebe und der Zugriementrieb als einfaches einstufiges Übersetzungsgetriebe aus je einer über Zugriemen (32) verbundenen Antriebs- und Abtriebsscheibe (33) ausgebildet sind,
- **dadurch gekennzeichnet, dass**
der Zugriementrieb und eines der Umlaufgetriebe als Übersetzungsgetriebe mit einer Übersetzung von i ≥ 1 ausgebildet sind, und
- antriebsseitig, d.h. ausgehend vom Antrieb bzw der Eingangswelle (25) zunächst ein erstes Umlaufrädergetriebe mit einem ersten Planetenträger (28) oder Steg zur Aufnahme und Lagerung von ersten außenverzahnten Planetenrädern (29) vorgesehen ist,
- wobei die ersten Planetenräder (29) mit dem konzentrisch zum ersten Planetenträger (28) angeordneten und mit der Eingangswelle (25) drehfest verbundenen ersten außenverzahnten Sonnenrad (30) und einem konzentrisch zum ersten Planetenträger (28) angeordneten innenverzahnten Hohlrad (31) kämmen,
- wobei das Hohlrad (31) drehbar gelagert und als Antriebsscheibe eines Zugriementriebs ausgebildet ist, bei dem der Zugriemen (32) einerseits das Hohlrad (31) und andererseits eine Abtriebsscheibe (33) außenseitig reib- und/oder formschlüssig zur Übertragung eines Drehmoments und einer Drehzahl teilumlaufend umschlingt,
- wobei Abtriebsscheibe (33) und ein zweiter Planetenträger (34) eines als Differential oder Leistungsteilungsgetriebes ausgebildeten zweiten Umlaufgetriebes so ausgebildet sind, dass eine Drehung der Abtriebsscheibe (33) des Zugriementriebs auf den zweiten Planetenträger (34) des zweiten Umlaufgetriebes übertragbar ist,
- wobei das zweite Umlaufgetriebe zwei mit jeweils einer Ausgangswelle (26, 27) drehfest verbundene, vorzugsweise kegelverzahnte Differential-Sonnenräder (35, 36) aufweist, die mit im zweiten Planetenträger (34) gelagerten nun zweiten Planetenrädern (37, 38) so kämmen, dass die Ausgangswellen (26, 27) mit gleicher oder unterschiedlicher Drehzahl oder Drehrichtung drehbar sind.

2. Mehrstufige Getriebeanordnung nach Anspruch 1, bei der die Abtriebsscheibe (33) des Zugriementriebs als zweiter Planetenträger (34) des zweiten Umlaufgetriebes ausgebildet ist oder drehfest mit dem Planetenträger verbunden ist.

3. Mehrstufige Getriebeanordnung nach einem der Ansprüche 1 bis 2, bei dem der oder die Sonnenräder (30, 35, 36) mindestens eines der Umlaufgetriebe konzentrisch zur Achse des Hohlrads (31) und / oder der Abtriebsscheibe (33) angeordnet sind.

4. Mehrstufige Getriebeanordnung nach einem der Ansprüche 1 bis 3, bei dem mindestens eines der Umlaufgetriebe im Wesentlichen innerhalb des Hohlrads (31) und / oder der Abtriebsscheibe (33) oder innerhalb einer durch den Außenumfang des Hohlrads (31) und / oder der Abtriebsscheibe (33) aufgespannten zylinderförmigen Hüllkurve angeordnet ist.

5. Mehrstufige Getriebeanordnung nach einem der Ansprüche 1 bis 4, bei der innerhalb des Getriebegehäuses eine lastabhängige Spanneinrichtung für den Zugriementrieb vorgesehen ist, bei der eine schwenkbar gelagerte erste Spannrolle (47) als Rückenrolle dem Lasttrum und eine schwenkbar gelagerte zweite Spannrolle (48) als Rückenrolle dem Leertrum zugeordnet sind, wobei die Spannrollen (47, 48) jeweils über eine an die Spannrollen angelenkte und im Gehäuse gelagerte Pendelstütze schwenkbar und miteinander so verbunden sind, dass durch ein unter Antriebslast erfolgendes Verschwenken der auf dem Lasttrum abrollenden ersten Spannrolle (47) die auf dem Leertrum abrollende zweite Spanrolle (48) verschwenkbar und im Sinne einer Erhöhung der Riemenspannung dem Leertrum zustellbar ist.

6. Mehrstufige Getriebeanordnung nach einem der Ansprüche 1 bis 5, bei dem Getriebestufen und Getriebegehäuse modulartig und vorzugsweise ähnlich oder identisch so ausgebildet sind, dass mehrere Getriebegehäuse mit ihren Getriebestufen zu einem Getriebeblock im Antriebsstrang verbindbar sind, über kongruent im oder am Getriebegehäuse angeordnete Bohrungen, Verbindungselemente oder Gehäuseöffnungen zusammenstellbar sind.

7. Mehrstufige Getriebeanordnung nach einem der Anspruch 1 bis 6, bei dem der Zugriementrieb als Zahnriementrieb oder Keilrippenriementrieb ausgebildet ist.

8. Mehrstufige Getriebeanordnung nach einem der Ansprüche 1 bis 7, ausgebildet als Getriebe für die Antriebsachse eines Elektrofahrzeugs.

## Claims

1. Multistage gear assembly for power transmission between an input shaft (25) and two output shafts (26, 27), in which at least two gear stages designed as epicyclic gears and a gear stage designed as a belt drive are arranged in series in the power or output flow and the epicyclic gears and/or belt drive each have a fixed, non-switchable transmission ratio, wherein
one of the epicyclic gears is designed as a differential or power-splitting gear for the output shafts (26, 27) and the gear stages are arranged within a common transmission housing, wherein the epicyclic gears are designed as toothed gears and the belt drive is designed as a simple one-stage step-up gear made of a respective drive and output pulley (33) connected via belts (32),
- **characterized in that**
- the belt drive and one of the epicyclic gears are designed as step-up gears with a step-up transmission ratio of i ≥ 1, and
- on the drive side, i.e. starting from the drive or the input shaft (25), firstly a first epicyclic gear having a first planet carrier (28) or web for receiving and mounting first externally toothed planet gears (29) is provided,
- wherein the first planet gears (29) mesh with the first externally toothed sun gear (30) arranged concentrically with the first planet carrier (28) and co-rotationally connected to the input shaft (25) and an internally toothed internal gear (31) arranged concentrically with the first planet carrier (28),
- wherein the internal gear (31) is rotatably mounted and designed as a drive pulley of a belt drive, in which the belt (32) firstly wraps partially circumferentially around the internal gear (31) and secondly with a frictional and/or form fit on the outside of an output pulley (33) for transmitting a torque and a rotational speed,
- wherein the output pulley (33) and a second planet carrier (34) of a second epicyclic gear designed as a differential or power-splitting gear are designed such that a rotation of the output pulley (33) of the belt drive can be transmitted to the second planet carrier (34) of the second epicyclic gear,
- wherein the second epicyclic gear has two, preferably bevel-toothed differential sun gears (35, 36) which are each co-rotationally connected to an output shaft (26, 27) and which mesh with now second planet gears (37, 38) that are mounted in the second planet carrier (34) such that the output shafts (26, 27) can be rotated with the same or different rotational speed or direction of rotation.

2. Multistage gear assembly according to Claim 1, in which the output pulley (33) of the belt drive is designed as a second planet carrier (34) of the second epicyclic gear or is co-rotationally connected to the planet carrier.

3. Multistage gear assembly according to either of Claims 1 and 2, in which the sun gear or gears (30, 35, 36) of at least one of the epicyclic gears is/are arranged concentrically with the axle of the internal gear (31) and/or of the output pulley (33).

4. Multistage gear assembly according to one of Claims 1 to 3, in which at least one of the epicyclic gears is arranged substantially inside the internal gear (31) and/or the output pulley (33) or inside a cylindrical envelope curve spanned by the outer circumference of the internal gear (31) and/or the output pulley (33).

5. Multistage gear assembly according to one of Claims 1 to 4, in which a load-dependent tensioning device for the belt drive is provided within the transmission housing, in which a pivotably mounted first tension roller (47) is assigned as a back roller to the load run and a pivotably mounted second tension roller (48) is assigned as a back roller to the idle run, wherein the tension rollers (47, 48) are each pivotable via a pendulum support which is articulated to the tension rollers and is mounted in the housing, and are connected to each other in such a way that, by means of pivoting the first tension roller (47) rolling on the load run, carried out under drive load, the second tension roller (48) rolling on the idle run can be pivoted and adjusted towards the idle run with the effect of increasing the belt tension.

6. Multistage gear assembly according to one of Claims 1 to 5, in which the gear stages and transmission housing are designed modularly and preferably similarly or identically, such that multiple transmission housings with their gear stages can be connected to form a transmission block in the drive train, combinable via holes, connecting elements or housing openings arranged congruently in or on the transmission housing.

7. Multistage gear assembly according to one of Claims 1 to 6, in which the belt drive is designed as a toothed belt drive or V-ribbed belt drive.

8. Multistage gear assembly according to one of Claims 1 to 7, designed as a transmission for the drive axle of an electric vehicle.

## Revendications

1. Agencement de transmission à plusieurs étages pour la transmission de puissance entre un arbre d'entrée (25) et deux arbres de sortie (26, 27), dans lequel au moins deux étages de transmission configurés sous forme d'engrenages épicycloïdaux et un étage de transmission configuré sous forme de mécanisme de transmission à courroie de traction sont agencés en série dans le flux de force ou de puissance, et l'engrenage épicycloïdal et/ou le mécanisme de transmission à courroie de traction présentent chacun une démultiplication fixe, non commutable, l'un des engrenages épicycloïdaux étant configuré sous forme de différentiel ou d'engrenage diviseur de puissance pour les arbres de sortie (26, 27) et les étages d'engrenages étant agencés à l'intérieur d'un carter de transmission commun, les engrenages épicycloïdaux étant configurés sous forme d'engrenages à roues dentées et le mécanisme de transmission à courroie de traction sous forme de simple engrenage démultiplicateur à un étage composé d'une poulie d'entraînement et d'une poulie entraînée (33) reliées par l'intermédiaire de courroies de traction (32),
**caractérisé en ce que**
le mécanisme de transmission à courroie de traction et l'un des engrenages épicycloïdaux sont configurés sous forme d'engrenages démultiplicateurs avec une démultiplication de i ≥ 1, et
- du côté de l'entraînement, c'est-à-dire en partant de l'entraînement ou de l'arbre d'entrée (25), il est d'abord prévu un premier train épicycloïdal avec un premier porte-satellites (28) ou une entretoise pour recevoir et loger des premiers satellites (29) à denture extérieure,
- les premiers satellites (29) engrenant avec la première roue solaire (30) à denture extérieure, agencée concentriquement au premier porte-satellites (28) et reliée solidairement en rotation à l'arbre d'entrée (25), et avec une couronne (31) à denture intérieure, agencée concentriquement au premier porte-satellites (28),
- la couronne (31) étant montée rotative et configurée sous forme de poulie d'entraînement d'un mécanisme de transmission à courroie de traction, dans lequel la courroie de traction (32) entoure en rotation partielle d'une part la couronne (31) et d'autre part une poulie entraînée (33) côté extérieur par friction et/ou par complémentarité de forme pour transmettre un couple et une vitesse de rotation,
- la poulie entraînée (33) et un deuxième porte-satellites (34) d'un deuxième engrenage épicycloïdal configuré sous forme de différentiel ou d'engrenage diviseur de puissance étant configurés de telle sorte qu'une rotation de la poulie entraînée (33) du mécanisme de transmission à courroie de traction peut être transmise au deuxième porte-satellites (34) du deuxième engrenage épicycloïdal,
- le deuxième engrenage épicycloïdal présentant deux roues solaires de différentiels (35, 36) à denture de préférence conique, reliées solidairement en rotation chacune à un arbre de sortie (26, 27), qui engrènent avec les deuxièmes satellites (37, 38) montés dans le deuxième porte-satellites (34) de telle sorte que les arbres de sortie (26, 27) peuvent tourner avec des vitesses de rotation ou des directions de rotation identiques ou différentes.

2. Agencement de transmission à plusieurs étages selon la revendication 1, dans lequel la poulie entraînée (33) du mécanisme de transmission à courroie de traction est configurée sous forme de deuxième porte-satellites (34) du deuxième engrenage épicycloïdal ou est reliée solidairement en rotation au porte-satellites.

3. Agencement de transmission à plusieurs étages selon l'une quelconque des revendications 1 à 2, dans lequel la ou les roues solaires (30, 35, 36) d'au moins l'un des engrenages épicycloïdaux sont agencées concentriquement par rapport à l'axe de la couronne (31) et/ou de la poulie entraînée (33).

4. Agencement de transmission à plusieurs étages selon l'une quelconque des revendications 1 à 3, dans lequel au moins l'un des engrenages épicycloïdaux est agencé essentiellement à l'intérieur de la couronne (31) et/ou de la poulie entraînée (33) ou à l'intérieur d'une courbe d'enveloppe cylindrique définie par la circonférence extérieure de la couronne (31) et/ou de la poulie entraînée (33).

5. Agencement de transmission à plusieurs étages selon l'une quelconque des revendications 1 à 4, dans lequel il est prévu à l'intérieur du carter de transmission un dispositif de tension dépendant de la charge pour le mécanisme de transmission à courroie de traction, dans lequel un premier galet tendeur (47) monté pivotant est associé au brin de charge en tant que galet de queue et un deuxième galet tendeur (48) monté pivotant est associé au brin de vide en tant que galet de queue, les galets tendeurs (47, 48) pouvant pivoter chacun par l'intermédiaire d'un support oscillant articulé sur les galets tendeurs et monté dans le carter, et étant reliés entre eux de telle sorte que, par un pivotement du premier galet tendeur (47) roulant sur le brin de charge sous l'effet d'une charge d'entraînement, le deuxième galet tendeur (48) roulant sur le brin de vide peut pivoter et être approché du brin vide dans le sens d'une augmentation de la tension de courroie.

6. Agencement de transmission à plusieurs étages selon l'une quelconque des revendications 1 à 5, dans lequel les étages de transmission et les carters de transmission sont modulaires et de préférence configurés de manière similaire ou identique de telle sorte que plusieurs carters de transmission peuvent être reliées avec leurs étages de transmission en un bloc de transmission dans la ligne d'entraînement, par l'intermédiaire d'alésages, d'éléments de liaison ou d'ouvertures de carter agencés de manière congruente dans ou sur le carter de transmission.

7. Agencement de transmission à plusieurs étages selon l'une quelconque des revendications 1 à 6, dans lequel le mécanisme de transmission à courroie de traction est configuré sous forme de mécanisme de transmission à courroie crantée ou de mécanisme de transmission à courroie trapézoïdale à nervures.

8. Agencement de transmission à plusieurs étages selon l'une quelconque des revendications 1 à 7, configuré sous forme de transmission pour l'essieu moteur d'un véhicule électrique.
